Europäisches Patentamt

European Patent Office

Office européen des brevets

(19)

(11) Publication number: **0 033 550**
**B1**

## (12) EUROPEAN PATENT SPECIFICATION

(45) Date of publication of patent specification: **09.05.84**

(51) Int. Cl.³: **A 01 G 9/10**

(21) Application number: **81100837.4**

(22) Date of filing: **05.02.81**

(54) **Carrying tray for propagation pots.**

(30) Priority: **05.02.80 NO 800295**

(43) Date of publication of application:
**12.08.81 Bulletin 81/32**

(45) Publication of the grant of the patent:
**09.05.84 Bulletin 84/19**

(84) Designated Contracting States:
**AT DE NL SE**

(56) References cited:
**DE - U - 1 866 103**
**DE - U - 1 955 700**
**FR - A - 2 401 605**
**NO - B - 137 117**
**US - A - 3 009 291**

(73) Proprietor: **VEFI A/S**
**Hegdal**
**N-3250 Larvik (NO)**

(72) Inventor: **Gundersen, Marius**
**Stavernvn. 8**
**N-3250 Larvik (NO)**

(74) Representative: **WILHELMS & KILIAN**
**Patentanwälte**
**Eduard-Schmid-Strasse 2**
**D-8000 München 90 (DE)**

Courier Press, Leamington Spa, England.

# Description

This invention relates to a carrying tray, used in horticultural industry, with a plurality of rows of cavities, each cavity being surrounded by an annular step or depression into which the upper edge or flange of each pot introduced into the cavity fits such that the upper edge of flanges is flush with the tray surface, as disclosed in DE—U—1 955 700.

According to this publication no features are disclosed to facilitate removal of the pots from the cavities; removal is difficult because no access for fingers or other lifting means to the underface of flanges of the pots is provided.

DE—U—1 866 103 discloses a tray where the upper edge or flange of each pot is not flush with the tray surface, the corresponding features of this tray making it difficult to fill the pots with soil using mechanical tools or to collect the soil which has fallen over the flanges of the pot into the circular recesses, the tray having other disadvantages with respect to stacking such trays with the pots already introduced into the tray.

Carrying trays are used in a propagation pot dispensing apparatus which is provided with the magazine containing pots above a separating drawer and below a magazine containing carrying trays.

A dispensing apparatus is described in detail in Norwegian Patent No. 137117 and the Norwegian Patent Application No. 784087, but the present invention does not concern any part of the dispensing apparatus itself. The present invention only concerns the trays used in the apparatus.

After the pots have been dispensed to the trays, these and the pots are transferred to a propagation table in the greenhouse, where the trays are placed side by side on the table. A table can accommodate some 5,000 pots.

In the main the table is based on the following principle: It slopes slightly in the crosswise direction and has raised edges all around it.

The top of the table is covered first with a layer of plastic foil and then with a layer of cloth. The purpose of the plastic foil is to prevent moisture from the cloth running off the table. The cloth may be of felt or a woven material.

The cloth is wetted by means of a sprinkler positioned along the length of the uppermost part of the sloping table. When sprinkled the water runs down along the cloth which gradually absorbs it.

The trays with their pots are placed side by side on the table until it is completely covered.

Both trays and pots are provided with holes which permit direct contact between the pots and the wet cloth.

It is most important that direct contact between pots and table is established to ensure a continuous supply of moisture to the pots. If this contact is broken, which will occur if the pots are not properly placed in the tray cavities, or soil falls from the pots into the cavities between the walls of the pot and the tray, the capillary effect between the wet cloth and the soil in the pot will cease and the soil will dry out. This will hinder plant culture during the growth period and result in a production loss.

The old trays are designed in such a way that the upper parts of the pots rise above the tray. This is done so that the pots can be easily taken hold of by the fingers or a suitable device.

However, it has been found that what is favourable when it comes to separating the pots from the tray is not so favourable when it comes to the continual moistening of the soil in the pots. It has been found that some of the soil which is spread over the trays and into the pots drops between the pots and remains there.

Some soil even drops into the tray cavities and prevents the pots from absorbing moisture. This will be explained:

a) Soil between pots

If rectangular pots are used they will rest against each other and therefore the open space between the tray cavities will not be particularly large.

As mentioned above, some of the soil which is spread over the trays and their pots will drop between the pots. Normal horticultural costs do not include the recovery of such soil.

If round pots are used soil dropped between them is a definite problem because the open spaces between the tray cavities are larger. For example, in the case of rectangular pots the open space between the tray cavities accounts for about 20% of the total tray area.

In the case of round pots it accounts for about 40%.

This soil cannot be used again since trays and pots are despatched together. Neither can the customer make use of the soil for fear of danger of infection from plant diseases. Thus, this soil must be regarded as a production loss. Therefore, for reasons of the horticultural industry's economy such waste soil must be kept at a minimum.

b) Soil in tray cavities

When soil is spread over the trays some will come to rest beneath the pots, thus displacing them in the tray cavities. The soil falls down between the tray and pot in the cavity so that no contact is made between the pot and the underlying wet cloth.

Further, some soil is bound to fall into the cavity every time a pot is lifted for inspection. This also results in the pot containing too little moisture when it is replaced in the tray cavity.

At best growth stagnates and at worst the plant dies. In any case this results in a loss to market gardening.

The purpose of the invention is the design of a carrying tray whereby pots are not so easily displaced in the cavities, and where soil does not so easily fall into such cavities.

The solution of the object of the invention are the carrying trays according to claims 1 to 3.

Surprisingly it has now been found according to this invention that if the pots are lowered into the tray so that the upper part lies flush with the tray, and if the tray is also provided with recesses between the cavities, it will be easier to take hold of the pots by means of the fingers or a suitable device, at the same time making it easier to recover the soil between the pots.

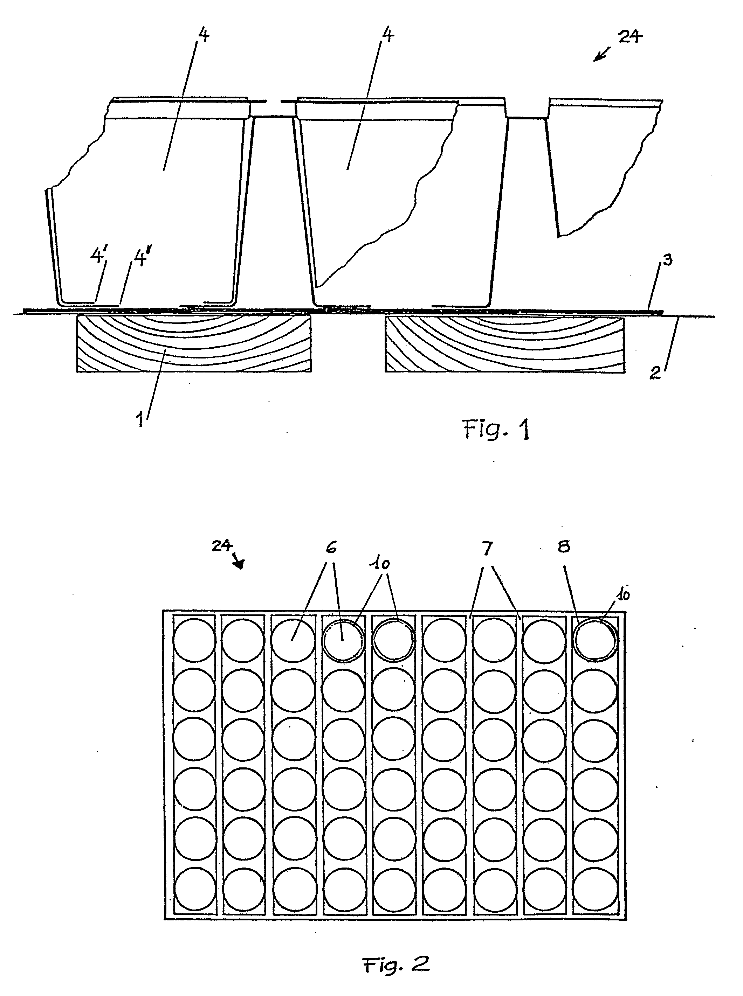

To permit better understanding of the invention attention is drawn to Fig. 1 which is a side view in section of a tray with pots standing on top of a propagating table covered with plastic foil and cloth.

Fig. 2 which is a plan view of a tray with cavity openings and recesses and

Figs. 3 and 4 which are views, partly in section, of trays and pots seen from two sides.

In the following like numbers will designate like parts. The tray is designated as 24, which corresponds with the designation in the aforementioned Norwegian patent documents.

Fig. 1 shows a table base (1). Over this is stretched a layer of plastic foil (2) and a layer of cloth (3), of felt or woven material, for the collection of moisture. The foil (2) is to prevent the moisture in the cloth from being absorbed by the underlying surface, and also to prevent it disappearing by some other means.

The carrying tray (24) and pots (4) are placed on top of the cloth (3). Both pots and trays are provided with openings at the bottom (4' and 4'') so that the soil in the pot is allowed to come into direct contact with the wet cloth. The pots are placed in the tray cavities (6).

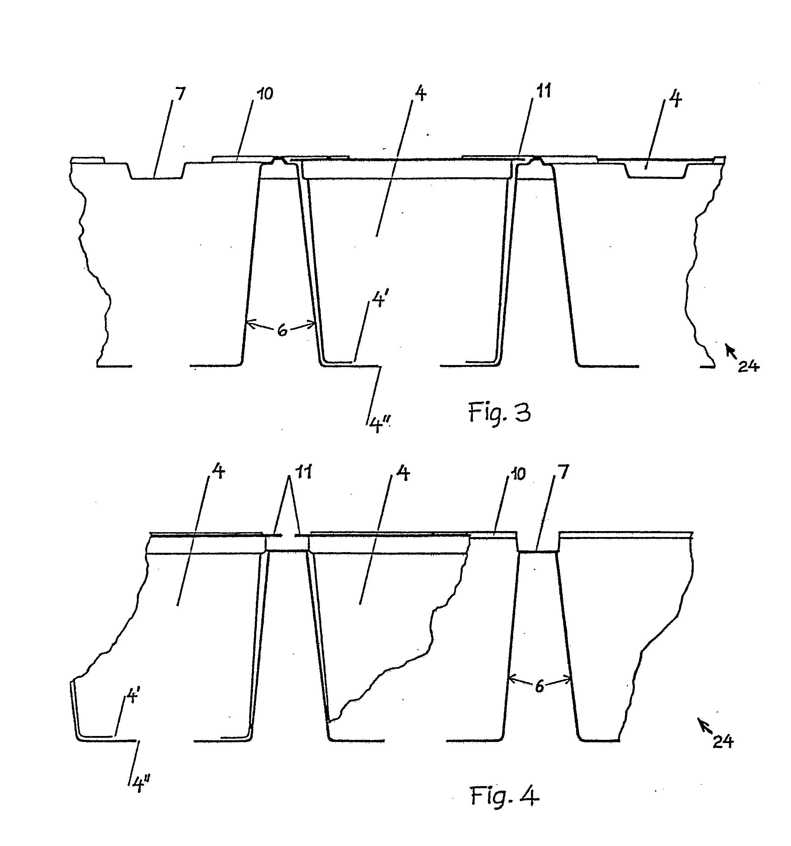

Fig. 2 shows the carrying tray from above, where the cavities (6) and recesses (7) can be seen. The annular step or depression (10) of the tray around the cavity opening (8) is not shown. This is shown on Figs. 3 and 4.

Figs. 3 and 4 show the tray (24) with the pots (4) placed in the cavities (6). The cavities are indicated by means of an arrow. The annular step or depression of the tray around the cavity opening is designated (10). Here the pot flange (11) can also be seen lying sunk in relation to the tray but flush with this.

The annular step or depression (10) around the tray cavities (6) is designed to prevent the outwardly projecting flanges of the pots rising above the tray. The recesses (7) between the tray cavities are designed to facilitate removal of the pots. These recesses (7) can be designed in the form of channels which are either continuous between the tray cavities or which are discontinued at intervals.

The recessed part (7) of the tray has a cross section of quadratic, rectangular, triangular or semi-circular form formed in a manner suitable for the purpose.

## Claims

1. Carrying tray, used in horticultural industry, with a plurality of rows of cavities, each cavity (6) being surrounded by an annular step or depression (10) into which the upper edge or flange (11) of each pot (4) introduced into the cavity fits such that the upper edge of flange (11) is flush with the tray surface, characterized in that recesses (7) in the form of channels extend between the rows of cavities, the base of each recess (7) being lower than the level of the depressions (10) and being so related to the annular steps or depressions (10) that the recesses (7) provide access for fingers or other lifting means to the underface of pot flanges (11) resting in the annular steps or depressions (10).

2. Carrying tray according to claim 1, characterized in that each recess (7) longitudinally and/or transversely extends between the tray cavities (6) and is interrupted or continuous from one side of the carrying tray to the other.

3. Carrying tray according to claim 2, characterized in that each recess (7) of the tray has a cross section of quadratic, rectangular, triangular or semi-circular form.

## Patentansprüche

1. Tragebehälter, der in der Gartenbauindustrie verwendet wird, mit einer Vielzahl von Reihen von Vertiefungen, wobei jede Vertiefung (6) von einer ringförmigen Stufe oder Ausnehmung (10) umgeben ist, in welche die oberen Kante oder Rand (11) jedes Topfes (4), der in die Vertiefung (6) eingebracht wird, derart hineinpaßt, daß die obere Kante des Randes (11) mit der Behälteroberfläche in einer Ebene liegt, dadurch gekennzeichnet, daß Aussparungen (7) in Form von Kanälen sich zwischen den Reihen von Vertiefungen (6) erstrecken, wobei die Basis jeder Aussparung (7) niedriger als das Niveau der Ausnehmung (10) liegt, und mit den ringförmigen Stufen oder Ausnehmungen (10) derart in Beziehung steht, daß die Aussparungen (7) Zugang für Finger oder andere Hebevorrichtungen zur Unterfläche der Topfränder (11), die in den ringförmigen Stufen oder Ausnehmungen (10) ruhen, ermöglichen.

2. Tragebehälter nach Anspruch 1, dadurch gekennzeichnet, daß sich jede Aussparung (7) zwischen den Behältevertiefungen (6) in Längs- und/oder Querrichtung von einer zur anderen Wand des Behälters erstreckt und kontinuierlich oder unterbrochen ausgebildet ist.

3. Tragebehälter nach Anspruch 2, dadurch gekennzeichnet, daß jede Aussparung (7) des Behälters einen Querschnitt von quadratischer, rechteckiger, dreieckiger oder halbkreisförmiger Form aufweist.

## Revendications

1. Plateau du support, employé dans l'industrie horticole, comportant plusieurs rangées de cavitiés, chaque cavité (6) étant entourée par un gradin ou retrait annulaire (10) dans lequel le bord supérieur ou collerette (11) de chaque pot (4) introduit dans la cavité s'ajuste de sorte que le bord supérieur ou collerette (11) affleure la surface du plateau, caractérisé en ce que des évidements (7) en forme de canaxu s'étendent entre les rangées de cavités, la base de chaque évidement (7) étant au-dessous du niveau des retraits (10) et étant disposée par rapport aux gradins ou retraits annulaires (10) de telle sorte que les évidements (7) fournissent un accès pour des doigts ou autres moyens de soulèvement vers la face inférieure des collerettes (11) des pots reposant sur les gradins ou retraits annulaires (10).

2. Plateau de support selon la revendication 1, caractérisé en ce que chaque évidement (7) entre les cavités (6) du plateau s'étend longitudinalement et/ou transversalement et est interrompu ou continu d'un côté du plateau de support à l'autre.

3. Plateau de support selon la revendication 2, caractérisé en ce que chaque évidement (7) du plateau a une section droite de forme carrée, rectangulaire, triangulaire ou semi-circulaire.

0 033 550

Fig. 1

Fig. 2

Fig. 3

Fig. 4